# EUROPÄISCHE PATENTSCHRIFT

(11) **EP 3 020 614 B1**
(45) Veröffentlichungstag und Bekanntmachung des Hinweises auf die Patenterteilung: **18.04.2018**
(21) Anmeldenummer: 15003166.4
(22) Anmeldetag: 05.11.2015
(51) Int. Cl.: B62B 5/00

(54) **FÖRDERSYSTEM ZUM FÖRDERN VON GEGENSTÄNDEN SOWIE STEUERUNGSVERFAHREN HIERFÜR**
CONVEYOR SYSTEM FOR CONVEYING OBJECTS AND CONTROL METHOD FOR SAME
SYSTEME DE CONVOYAGE D'OBJETS ET SON PROCEDE DE COMMANDE

(30) Priorität: 17.11.2014 DE 102014016900
(43) Veröffentlichungstag der Anmeldung: 18.05.2016
(73) Patentinhaber: Eisenmann SE, 71032 Böblingen (DE)
(72) Erfinder: Schulze, Herbert, D-71134 Aidlingen (DE)
(74) Vertreter: Ostertag & Partner Patentanwälte mbB

(56) Entgegenhaltungen:
- EP-A1- 2 100 831
- WO-A2-2009/043474
- DE-U1-202014 006 562

## Beschreibung

### 1. Gebiet der Erfindung

Die Erfindung betrifft ein Steuerungsverfahren für ein Fördersystem zum Fördern von Gegenständen wie Paletten oder anderen Ladungsträgern, das mindestens zwei voneinander getrennte Fördereinheiten umfasst.

### 2. Beschreibung des Standes der Technik

Aus der DE 10 2008 014 877 A1 ist ein Fördersystem bekannt, bei dem jeweils zwei Fördereinheiten nach Art eines Transportwagens eine Fördereinrichtung bilden, wobei zwei Transportwagen für das Fördern von Ladungsträgern in Form von Paletten konzipiert sind. Hierzu können die beiden Transportwagen als Transportwagenpaar eine Palette unterfahren, diese dann anheben und an einen anderen Ort fördern. Insbesondere wird mit dem Fördersystem das automatische Verladen von Paletten in Lastkraftwagen ermöglicht. Hierzu ist jeder Transportwagen mit einem an ihm befestigten elektrischen Zuleitungskabel versehen, das die Antriebe des Transportwagens versorgt und ansteuert, Sensorsignale überträgt und ferner als Zugseil verwendet werden kann, um die Transportwagen in ihrer Bewegungsrichtung zu korrigieren. Zudem werden die Zuleitungskabel als Zugseile verwendet, um Fahrwegkorrekturen vorzunehmen. Ein derartiges Fördersystem ist jedoch stark in seiner Flexibilität eingeschränkt.

Aus der DE 20 2014 006 562 U1 und der WO 2009/043474 A2 sind Fördersysteme bekannt, die Fördereinheiten umfassen, die voneinander getrennt sind und unabhängig voneinander verfahren werden können.

### ZUSAMMENFASSUNG DER ERFINDUNG

Es ist Aufgabe der Erfindung, für ein flexibles Fördersystem, das freifahrende voneinander getrennte Fördereinheiten umfasst, ein Steuerungsverfahren zu schaffen, das deren Bewegungen koordiniert und synchronisiert, so dass diese gemeinsam Gegenstände und insbesondere einen Ladungsträger transportieren können.

Diese Aufgabe wird mit einem Steuerungsverfahren für ein Fördersystem zum Fördern von Gegenständen gelöst, das mindestens zwei voneinander getrennte, freifahrende (d.h. nicht schienengebundene) Fördereinheiten umfasst. Erfindungsgemäß ist vorgesehen, dass einer ersten Fördereinheit eine übergeordnete Stellung und einer zweiten Fördereinheit eine untergeordnete Stellung zugewiesen wird, derart, dass die zweite Fördereinheit der ersten Fördereinheit folgt, indem die zweite Fördereinheit mit Hilfe eines Sensors eine Veränderung der relativen Lage der ersten und der zweiten Fördereinheit zueinander erfasst und Fahrparameter, die zu ihrer Steuerung verwendet werden, in Abhängigkeit von der vom Sensor erfassten Veränderung der relativen Lage modifiziert.

Die Erfindung beruht auf der Erkenntnis, dass dann, wenn zwei oder mehr Fördereinheiten als Gruppe ein Ziel anfahren sollen, die herkömmliche individuelle Steuerung der Fördereinheiten zu Schwierigkeiten führen kann. Wenn der Abstand zwischen den Fördereinheiten einer Gruppe gering ist, besteht beispielsweise die Gefahr, dass Fördereinheiten kollidieren, falls die Fördereinheiten geringfügig von ihrem Soll-Fahrweg abkommen. Schwierigkeiten entstehen auch dann, wenn ein Gegenstand gemeinsam durch zwei mechanisch getrennte Fördereinheiten gefördert werden soll. In diesem Fall ist es häufig erforderlich, dass die Bewegungen der Fördereinheiten sehr genau aufeinander abgestimmt sind, um z.B. ein Verrutschen des Gegenstands zu vermeiden. Die herkömmliche individuelle Steuerung stößt in solchen Fällen schnell an Grenzen, weil die Abweichungen von den Soll-Fahrwegen häufig zu groß sind.

Die erfindungsgemäße Zuweisung einer übergeordneten Stellung zu einer ersten Fördereinheit und einer untergeordneten Stellung zu einer (oder mehreren) zweiten Fördereinheit ermöglicht es, die Fahrwege der Fördereinheiten sehr genau aufeinander abzustimmen, weil die zweite Fördereinheit in der untergeordneten Stellung sich direkt am Fahrweg der Fördereinheit in der übergeordneten Stellung orientiert. Hierbei ermittelt die zweite Fördereinheit mit Hilfe eines Sensors eine Veränderung der relativen Lage der ersten und der zweiten Fördereinheit zueinander und passt in Abhängigkeit davon ihre Fahrparameter wie Drehzahl und Lenkwinkel an. Dadurch lassen sich unerwünschte Abweichungen zwischen den Fahrwegen deutlich verringern. Kollisionen zwischen in Gruppen fahrenden Fördereinheiten und auch ein Verrutschen von gemeinsam geförderten Gegenständen können so vermieden werden.

Unter Umständen lässt sich auch der Aufwand für die Steuerung der Fördereinheiten verringern, weil nur noch die erste Fördereinheit in der übergeordneten Stellung selbst ihren Weg finden muss. Bei der zweiten Fördereinheit in der untergeordneten Stellung kann hingegen ggf. auf eine eigene Ortung und Navigation verzichtet werden.

Bei einem Ausführungsbeispiel handelt es sich bei den Gegenständen um beladene oder unbeladene Ladungsträger, die beispielsweise als Paletten ausgeführt sein können. Des Weiteren umfasst jede Fördereinheit ein Fahrwerk, welches auf Bodenrollen verfahrbar ist, sowie ein von dem Fahrwerk mitgeführtes Tragelement, welches bezogen auf das Fahrwerk anhebbar oder absenkbar ist, derart, dass die Fördereinheit in einer Leerkonfiguration einen Ladungsträger unterfahren und in einer Förderkonfiguration einen Ladungsträger mit dem Tragelement aufnehmen kann. Ferner umfasst jede Fördereinheit ein Antriebssystem, mittels welchem wenigstens eine der Bodenrollen und das Tragelement antreibbar sind und eine Steuereinrichtung, der eine Zentralsteuerung einen Fahrweg zuweist und daraus Fahrparameter bestimmt, die zur Steuerung des Antriebssystems verwendet werden.

Die erste Fördereinheit und die zweite Fördereinheit können dann, wenn sie sich in ihrer Förderkonfiguration befinden und gemeinsam einen Ladungsträger aufgenommen haben, eine Fördereinrichtung bilden, die dazu eingerichtet ist, den Ladungsträger zu fördern. In diesem Falle kann zumindest dann, wenn der Ladungsträger unbeladen ist, der ersten Fördereinheit die übergeordnete Stellung und der zweiten Fördereinheit die untergeordnete Stellung zugewiesen werden.

Die Zentralsteuerung des Fördersystems kann bedarfsangepasst Fördereinheiten zu Fördereinrichtungen zusammensetzen, wobei die notwendigen Fördereinheiten aus günstig gelegenen Vorräten des Fördersystems bezogen werden können. So ist ein Ausfall einer Fördereinheit mit geringerer Gesamtausfallzeit des Fördersystems verbunden, was die Verfügbarkeit des Fördersystems erhöht.

Für das gemeinsame Fahren der zwei getrennten Fördereinheiten gibt die Zentralsteuerung beiden Fördereinheiten jeweils einen Fahrweg vor.

Bei dem Transport von nicht oder nur wenig beladenen Ladungsträgern kann es vorkommen, dass durch zu geringe Bodenhaftung eine oder mehrere der Bodenrollen einer Fördereinheit durchrutschen, sodass es zu einer Relativbewegung zwischen den Fördereinheiten kommt. Aufgrund der in diesem Fall geringen Haftung zwischen Fördereinheiten und Ladungsträger, entsteht eine Relativbewegung auch zwischen den Fördereinheiten und dem Ladungsträger. Ferner kann eine unterschiedliche Abnutzung der Bodenrollen dazu führen, dass eine Fördereinheit eine andere tatsächliche Geschwindigkeit hat als die, die sich aus der Berechnung aus einer Soll-Drehzahl und einem Standard-Bodenrollen-Durchmesser ergibt. Dadurch würden sich in einer Fördereinrichtung zwangsweise zwei unterschiedliche Geschwindigkeitsvektoren einstellen, wobei sowohl Betrag als auch Richtung voneinander abweichen können.

Bei schwerer beladenen Ladungsträgern wird es in der Regel zu diesem Problem nicht kommen, weil der Ladungsträger aufgrund seines Gewichts die beiden Fördereinheiten starr miteinander koppelt und sich dadurch keine unterschiedlichen Geschwindigkeitsvektoren einstellen können. Abnutzungen oder größere Toleranzen machen sich dann evtl. in unterschiedlichen Leistungsaufnahmen der Antriebe bemerkbar und können dann, falls erforderlich, über die Steuereinrichtung ausgeglichen werden. Trotzdem ist auch hier die Zuweisung einer übergeordneten und einer untergeordneten Stellung in der Fördereinrichtung möglich.

Ferner kann vorgesehen sein, dass die Fördereinheiten einzeln und unabhängig voneinander einen zu transportierenden Ladungsträger anfahren, solange sie keine Fördereinrichtung gebildet haben. Dadurch ist es möglich, dass jede Fördereinheit einen für sie zeitoptimierten Weg bis zu dem Ladungsträger fährt. Dennoch kann bereits zu diesem Zeitpunkt eine Zuweisung einer übergeordneten und einer untergeordneten Stellung erfolgen.

Bei einer günstigen Ausbildung ist vorgesehen, dass die zweite Fördereinheit mittels eines entlang einer Längsseite angeordneten Sensors die Veränderung der relativen Lage der ersten und der zweiten Fördereinheit einer Fördereinrichtung zueinander erfasst, und dass die zweite Fördereinheit derart ausgerichtet wird, dass der Sensor der zweiten Fördereinheit in Richtung der ersten Fördereinheit zeigt. Der Sensor erfasst dann von der Seite her die relative Lage der ersten Fördereinheit. Dies ist auch dann möglich, wenn die Fördereinheiten gemeinsam eine Palette oder einen anderen Ladungsträger fördern, weil diese häufig einen in Querrichtung verlaufenden Durchbruch haben, durch den hindurch der Sensor die erste Fördereinheit erfassen kann. Der Sensor kann insbesondere als optischer Sensor ausgebildet sein, der Lichtsignale erfasst, die von einer an der gleichen oder an der gegenüber fahrenden Fördereinheit angeordneten (Laser-)Lichtquelle erzeugt werden. Der Sensor kann insbesondere als laseroptischer Triangulationssensor, wie er beispielsweise von der Firma Micro-Epsilon angeboten wird, ausgebildet sein. Bei diesen Sensoren sind eine Laserlichtquelle und ein positionsempfindliches Messelement, z.B. eine CCD-Zelle, in einem Modul integriert.

Des Weiteren kann vorgesehen sein, dass bei einer Fahrt in Richtung diagonal zu der Längsachse der Fördereinrichtung die Bodenrollen jeder Fördereinheit der Fördereinrichtung jeweils parallel zueinander sind. Hierzu werden alle Bodenrollen synchron und gleich angetrieben.

Besonders vorteilhaft ist es, wenn bei einer Fahrt in Richtung senkrecht zu der Längsachse der Fördereinrichtung die Bodenrollen jeder Fördereinheit der Fördereinrichtung jeweils koaxial zueinander sind. Indem der Ladungsträger als verbindendes Glied genutzt wird, wird eine besonders flexible Fahrweise der Fördereinrichtung ermöglicht, die durch die einzelnen Komponenten nicht ausführbar ist. Auf diese Weise ist ein Richtungswechsel der Fördereinrichtung um 90° ohne Kurvenfahrt realisierbar. Insbesondere kann mit dieser Fahrweise schnell eine genaue Positionierung der Fördereinheit auf engerem Raum erreicht werden, beispielsweise beim Beladen eines LKWs.

Ferner können die Bodenrollen in jedem Fahrwerkendbereich der ersten Fördereinheit der Fördereinrichtung bei einer Geradeaus-Fahrt im Wesentlichen koaxial zu den Bodenrollen in dem entsprechenden Fahrwerkendbereich der zweiten Fördereinheit der Fördereinrichtung sein. Alternativ können die Achsen der Bodenrollen zweier Fördereinheiten paarweise jeweils einen Versatz in Fahrtrichtung aufweisen. Dieser muss allerdings bei Kurvenfahrten rechnerisch berücksichtigt werden.

Bei Ausfall einer Fördereinheit kann die Fördereinrichtung aufgelöst werden und mit einer neu hinzugekommenen Fördereinheit neu gebildet werden. Hierbei wird der neu hinzugekommenen Fördereinheit die übergeordnete oder die untergeordnete Stellung der ausgefallenen Fördereinheit zugewiesen.

Bei einem weiteren Ausführungsbeispiel ist vorgesehen, dass ein Wechsel der untergeordneten und der übergeordneten Stellung der Fördereinheiten jederzeit möglich ist. Fällt beispielsweise der Sensor der Fördereinheit in der untergeordneten Stellung aus, so dass eine Veränderung der relativen Lage der ersten und der zweiten Fördereinheit zueinander nicht mehr erfasst werden kann, kann diese Fördereinheit die Fahrt in der übergeordneten Stellung fortsetzen. Dazu werden, falls der Sensor nur an einer Längsseite angeordnet ist, die Fördereinheiten umorientiert, wodurch die notwendige Orientierung wiederhergestellt wird. Alternativ können Fördereinheiten eingesetzt werden, die keine Asymmetrie im konstruktiven Aufbau aufweisen. Dadurch wird die Flexibilität des Fördersystems deutlich erhöht.

Des Weiteren kann vorgesehen sein, dass die Fördereinheiten in der Lage sind, mittels Kameras oder anderen Sensoren ihren Fahrweg zu finden. Um Sach- und Personenschaden zu vermeiden, kann jede Fördereinheit Sicherheitseinrichtungen umfassen, die Gegenstände oder Personen, die sich in dem Fahrweg befinden, erfassen und dies der Zentralsteuerung oder der Steuereinrichtung der Fördereinheit mitteilen, so dass eine Änderung der Fahrparameter vorgenommen wird. Die Sensoren können dabei an einer oder an beiden Stirnseiten der Fördereinheit angeordnet sein.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Ansicht eines Fördersystems zum Fördern von Ladungsträgern, bei welchem zwei unabhängig voneinander verfahrbare, zinkenartige Fördereinheiten eine Fördereinrichtung bilden;
- Figur 2: eine der Figur 1 entsprechende perspektivische Ansicht des Fördersystems, wobei außerdem ein Ladungsträger in der Form einer Palette gezeigt ist;
- Figur 3: eine Seitenansicht einer Fördereinheit in einer Leerkonfiguration in teilweiser Durchsicht, so dass ein Fahrwerk, ein Antriebssystem und eine Hub-/ Senkeinrichtung für ein Tragelement zu erkennen sind;
- Figur 4: eine Ansicht von oben in teilweiser Durchsicht auf die Fördereinrichtung;
- Figur 5: eine Ansicht von oben auf einen Beladebereich mit dem Fördersystem, das bei einem Transportauftragseingang verschiedene räumlich verteilte Vorräte an Fördereinheiten umfasst;
- Figur 6: eine der Figur 5 entsprechende Ansicht von oben auf den Beladebereich, wobei eine Fördereinheit in einem Wartungszustand ist;
- Figur 7: eine der Figur 6 entsprechende Ansicht von oben auf den Beladebereich, wobei eine erste Fördereinheit den Ladungsträger unterfahren hat und eine zweite Fördereinheit hinzukommt;
- Figur 8: eine der Figur 7 entsprechende Ansicht von oben auf den Beladebereich, wobei die zweite Fördereinheit eine Wendefahrt vorgenommen hat;
- Figur 9: eine der Figur 8 entsprechende Ansicht von oben auf den Beladebereich, wobei die zwei Fördereinheiten die Fördereinrichtung bilden;
- Figur 10: eine der Figur 9 entsprechende Ansicht von oben auf den Beladebereich, wobei die Fördereinrichtung den Ladungsträger transportiert.

### BESCHREIBUNG BEVORZUGTER AUSFÜHRUNGSBEISPIELE

### 1. Grundlegender Aufbau des Fördersystems

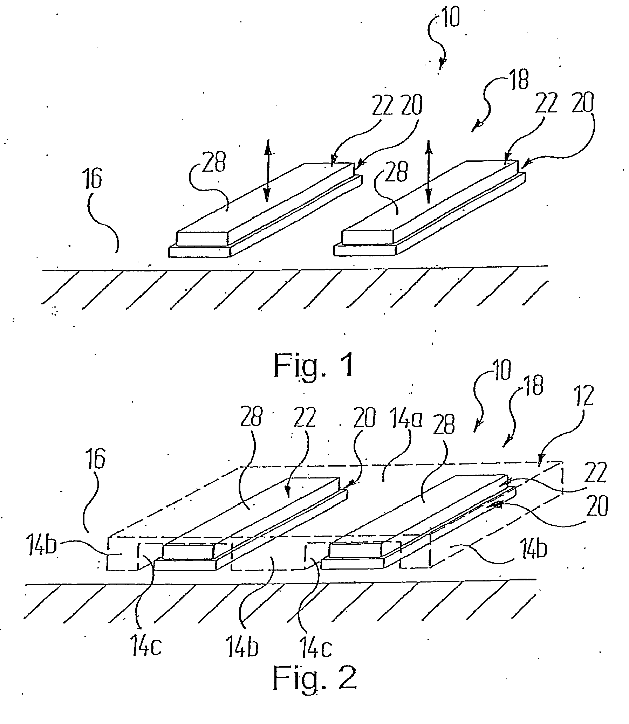

In den Figuren ist mit 10 insgesamt ein Fördersystem bezeichnet, mit dem Gegenstände, hier beladene oder unbeladene Ladungsträger 12, gefördert werden können. Als Beispiel für Ladungsträger 12 ist in der Figur 2 eine Palette gezeigt, wie sie an und für sich bekannt ist.

Ein Ladungsträger 12 hat eine Tragfläche 14a, auf welcher nicht eigens gezeigtes Fördergut abgestellt und befestigt werden kann. Die Tragfläche 14a ruht über Auflageelemente 14b auf einem Boden 16. Zwischen zwei benachbarten Auflageelementen 14b verbleibt jeweils ein lichter Durchgang 14c, der nach unten zum Boden 16 hin und an beiden Stirnenden offen ist. Insbesondere kann ein solcher Ladungsträger 12 als so genannte Euro-Palette ausgebildet sein.

Das Fördersystem 10 umfasst eine Vielzahl von Fördereinrichtungen 18, die auf dem Boden 16 verfahren werden können. Eine Fördereinrichtung 18 ist ihrerseits aus zwei Fördereinheiten 20 gebildet. Die Fördereinheiten 20 haben beim vorliegenden Ausführungsbeispiel eine Außenkontur, die etwa derjenigen einer Gabelzinke eines Gabelstaplers entspricht.

Diese Fördereinheiten 20 kommunizieren in an und für sich bekannter Weise miteinander oder mit einer nicht eigens gezeigten Zentralsteuerung, die den Förderprozess koordiniert.

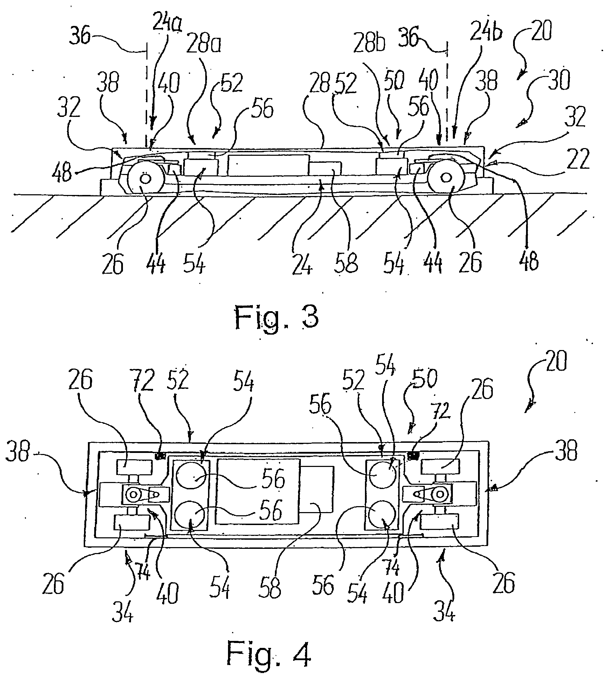

In den Figuren 3 und 4 ist eine der Fördereinheiten 20 der Fördereinrichtung 18 separat gezeigt. Die Fördereinheit 20 umfasst ein Fahrwerk 24, welches auf Bodenrollen 26 verfahren werden kann und zwei Endbereiche 24a, 24b definiert.

Das Fahrwerk 24 führt außerdem ein Tragelement 28 mit sich, welches bezogen auf das Fahrwerk 24 angehoben oder abgesenkt werden kann; dies ist lediglich in Figur 1 durch Doppelpfeile veranschaulicht. Wenn das Tragelement 28 eine abgesenkte Stellung einnimmt, befindet sich die Fördereinheit 20 in einer Leerkonfiguration, in welcher sie den Ladungsträger 12 unterfahren kann. In dieser Leerkonfiguration kann die Fördereinheit 20 auch durch den lichten Durchgang 14c des Ladungsträgers 12 hindurchfahren, d.h. dass die Fördereinheit 20 auf einer Seite unter den Ladungsträger 12 einfahren, unter diesem hindurch und auf der anderen Seite wieder aus dem Ladungsträger 12 herausfahren kann. Hierzu ist die Fördereinheit 20 in ihrer Außenkontur auf zu fördernde Ladungsträger 12 abgestimmt. Im Falle einer Palette bedeutet dies, dass die Fördereinheit 20 in ihrer Leerkonfiguration solche Abmessungen hat, dass sie in einen von deren lichten Durchgängen 14c einfahren kann, so dass sich die Fördereinheit 20 in diesem Durchgang 14c unter der Tragfläche 14a der Palette befindet.

Umgekehrt müssen auch die Ladungsträger 12 an die Fördereinheiten 20 angepasst sein und wenigstens Raum für zwei Fördereinheiten 20, beispielsweise in der Form von zwei solchen lichten Durchgänge 14c bereitstellen.

Dann wird das Tragelement 28 einer Fördereinheit 20 bezogen auf das Fahrwerk 24 angehoben. Wenn das Tragelement 28 eine angehobene Stellung einnimmt, befindet sich die Fördereinheit 20 in einer Förderkonfiguration, in der sie einen Ladungsträger 12 mit ihrem Tragelement 28 aufnehmen und zusammen mit einer weiteren Fördereinheit 20 fördern kann.

Wie in den Figuren 3 und 4 zu erkennen ist, umfasst jede Fördereinheit 20 ein Antriebssystem 30, mittels welchem die Bodenrollen 26 und das Tragelement 28 antreibbar sind.

Für das Fahrwerk 24 umfasst das Antriebssystem 30 einen Fahrantrieb 32, der die Bodenrollen 26 antreibt. Die Bodenrollen 26 sind jeweils als Rollenpaar 34 um eine Lenk-Drehachse 36 verdrehbar gelagert. Die Lenk-Drehachsen 36 sind nur in Figur 3 gezeigt und verlaufen vertikal, wenn die Fördereinheit 20 mit den Bodenrollen 26 auf einem horizontal ebenen Boden 16 aufliegt.

Der Fahrantrieb 32 umfasst Antriebseinheiten 38 und Lenkeinheiten 40 an den gegenüberliegenden Endbereichen 24a, 24b des Fahrwerks 24. Die Antriebseinheiten 38 umfassen Antriebs-Elektromotoren 42, welche die Bodenrollen 26 ohne zwischengeschaltete Getriebemittel antreiben.

Die Lenkeinheiten 40 umfassen jeweils einen Lenk-Elektromotor 44, der über Getriebemittel 46, beispielhaft ist in den Figuren 3 und 4 ein Riemenzug 48 veranschaulicht, die Lage der Boden-rollen 26 bezogen auf ihre Lenk-Drehachse 36 einstellen kann.

Die Fördereinheiten 20 werden nun verfahren, indem die Antriebs-Elektromotoren 42 und die Lenk-Elektromotoren 44 aufeinander abgestimmt bestromt werden.

Wenn alle vier Bodenrollen 26 einer Fördereinheit 20 senkrecht zur Längsrichtung der Fördereinheit 20 ausgerichtet sind und alle Antriebs-Elektromotoren 42 gleich angesteuert werden, nimmt die Fördereinheit 20 eine Linearfahrt-Konfiguration für eine Geradeaus-Fahrt ein; dies veranschaulicht exemplarisch die in der Figur 4 gezeigte Fördereinheit 20.

Für Kurvenfahrten muss die Ausrichtung der Achsen der Bodenrollen 26 bezogen auf die Längsrichtung der Fördereinheiten 20 geändert werden. Dazu können die Bodenrollen 26 jeweils als Rollenpaar durch die Lenk-Elektromotoren 44 um die Drehachse 36 verdreht werden.

So kann die Fördereinheit 20 eine Kurvenfahrt-Konfiguration einnehmen und eine Kreiskurve fahren, wenn die Rollenpaare 34 so ausgerichtet sind, dass die Achsen der Bodenrollen 26 senkrecht auf der zu fahrenden Kreiskurve stehen. Bei einer Fördereinrichtung 18 mit zwei Fördereinheiten 20 kann eine Palette 14 dann beispielsweise auch auf der Stelle verdreht werden, wenn alle vier Rollenpaare 34 der beiden Fördereinheiten 20 in dieser Weise auf einen und denselben Kreis ausgerichtet sind.

Während Kurvenfahrten kann die Steuerung auch die unterschiedlichen Laufwege der bezogen auf die Kurve radial außen liegenden Bodenrollen 26 gegenüber den radial innen liegenden Bodenrollen 26 berücksichtigen. Die unterschiedlichen Laufwege können auch durch Getriebemittel der Antriebseinheiten 38 ausgeglichen werden.

Für das Anheben und Absenken des Tragelements 28 umfasst das Antriebssystem 20 eine Hub-/Senkeinrichtung 50. Diese Hub-/Senkeinrichtung 50 arbeitet unabhängig von dem Fahrantrieb 32.

Dadurch ist das Antriebssystem 20 derart eingerichtet, dass das Tragelement eine Bewegung durchführen kann, die sich als eine Überlagerung einer horizontalen Bewegungskomponente des Fahrwerks 24 und einer vertikalen Bewegungskomponente des Tragelements 28 beschreiben lässt. Dies bedeutet, dass die Fördereinrichtung 18 den Ladungsträger 12 mit oder ohne Ladung während der Fahrt anheben oder absenken kann. Die Fördereinheiten 20 der Fördereinrichtung 18 müssen hierfür nicht stillstehen, können dies jedoch bei Bedarf.

Die Hub-/Senkeinrichtung 50 umfasst zwei Hub-/Senkeinheiten 52, von denen beim vorliegenden Ausführungsbeispiel an den beiden Endbereichen 24a, 24b des Fahrwerks 24 jeweils eine angeordnet ist. Die beiden Hub-/Senkeinheiten 52 sind jeweils mit unterschiedlichen Bereichen 28a, 28b des Tragelements 28 gekoppelt. An den Koppelstellen können die Hub-/Senkeinheiten 52 jeweils ein Anheben oder Absenken des Tragelements 28 bewirken.

Die Figuren 3 und 4 veranschaulichen ein Ausführungsbeispiel, bei welchem jede Hub-/Senkeinheit 52 jeweils zumindest einen Arbeitszylinder 54 umfasst, der mit einem beweglichen Zylinderelement 56 an der dem Fahrwerk 24 zugewandten Seiten des Tragelements 28 angreift.

Wie in Figur 4 zu erkennen ist, kann eine Hub-/Senkeinheit 52 auch jeweils zwei Arbeitszylinder 54 umfassen, die quer zur Längsrichtung der Fördereinheit 20 nebeneinander am Fahrwerk 24 angebracht sind.

Dabei können die beiden Hub-/Senkeinheiten 52 einer Fahreinheit 20 unabhängig voneinander betrieben werden. In Figur 3 ist die Fördereinheit 20 in ihrer Leerkonfiguration gezeigt. Zum einen können die Tragelemente 28 im Vergleich zu der Leerkonfiguration gleichmäßig gegenüber dem Fahrwerk 24 angehoben werden und eine entsprechende Förderkonfiguration einnehmen.

Zum anderen kann das Tragelement 28 in Längsrichtung der Fördereinheit 20 jedoch auch in eine geneigte Längsneigungs-Förderkonfiguration gebracht werden, wobei das Tragelement 28 am einen Endbereich 24a des Fahrwerks 24 diesem gegenüber weiter angehoben ist als am gegenüberliegenden Endbereich 24b.

Auf diese Weise können also nicht nur Neigungen des Bodens 16 quer zur Fahrtrichtung durch zwei zusammenarbeitende Fördereinheiten 20 einer Fördereinrichtung 18, sondern auch längs zur Fahrtrichtung der Fördereinrichtung 18 durch jeweils eine der Fördereinheiten 20 ausgeglichen werden.

Weitere Möglichkeiten zur Ausgestaltung der Fördereinheiten sind der DE 20 2014 006 562 U1 zu entnehmen.

### 2. Steuerungsverfahren

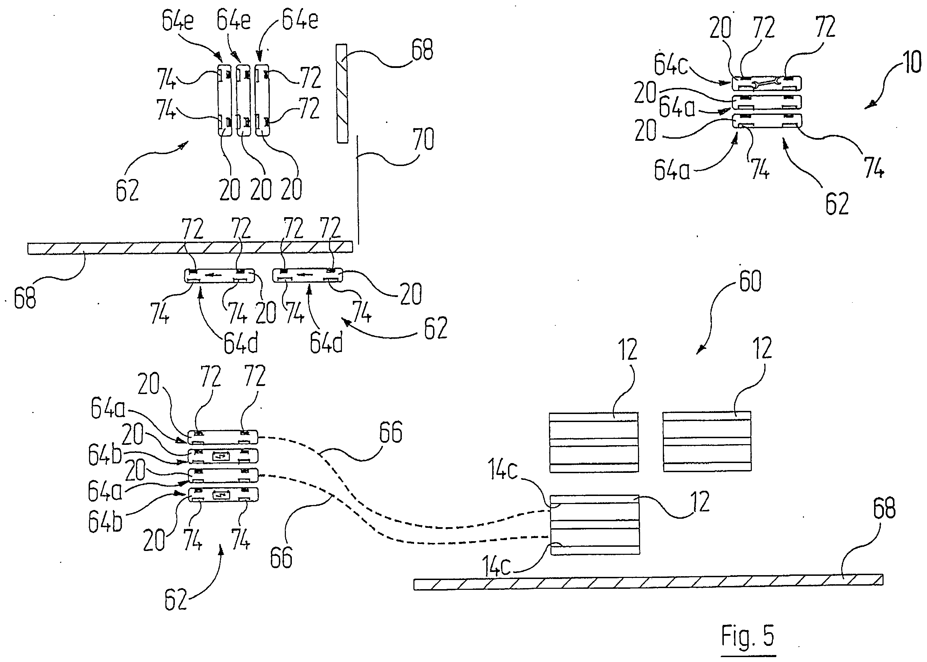

Die Figur 5 veranschaulicht einen Beladebereich 60 mit mehreren Fördereinheitenvorräten 62, die Fördereinheiten 20 in verschiedenen Zuständen enthalten. In einem Frei-Zustand 64a ist eine Fördereinheit 20 betriebsbereit und kann den Ladungsträger 12 erreichen. In einem Ladezustand 64b werden Speicherkomponenten der Fördereinheiten 20 elektrisch aufgeladen. In einem Wartungszustand 64c werden Wartungs- oder Reparaturarbeiten an den Fördereinheiten 20 durchgeführt. In einem Transportzustand 64d erfüllen die Fördereinheiten 20 einen von der Zentralsteuerung aufgegebenen Transportauftrag. In einem Sperrzustand 64e kann eine Fördereinheit 20 aufgrund von unüberwindbaren Hürden, wie beispielsweise Wände 68 und/oder Türen 70, welche den Fahrweg versperren, in einem Transportauftrag nicht eingesetzt werden.

In der Figur 5 ist ein Beladebereich 60 mit einem Fördersystem 10 veranschaulicht, bei dem an die Zentralsteuerung ein Signal gesendet wird, dass ein bestimmter Ladungsträger 12 an einen anderen Ort transportiert werden soll. Die Zentralsteuerung ermittelt daraufhin zwei Fördereinheiten 20, die in einem Frei-Zustand 64a sind und die den Ladungsträger 12 in einer kürzesten Zeit erreichen würden. Die entsprechenden Fördereinheiten 20 erhalten einen Transportauftrag, so dass ihr Zustand in den Transportzustand 64d übergeht. Somit erfolgt noch vor der Bildung einer Fördereinrichtung 18 aus den zwei Fördereinheiten 20 eine logische Paarbildung. Die zwei Fördereinheiten 20 können miteinander kommunizieren und beispielsweise Statusmeldungen austauschen, fahren allerdings den zu transportierenden Ladungsträger 12 einzeln und unabhängig voneinander an. Hierbei beginnen sie sich gleichzeitig auf jeweils einen hinsichtlich der Gesamtfahrzeit der zwei Fördereinheiten 20 kürzesten Fahrweg 66, der von einer Zentralsteuerung vorgegeben wurde, in Richtung zu transportierenden Ladungsträger 12 zu bewegen. Bei dem in der Figur 5 gezeigten Ausführungsbeispiel verlaufen die zwei Fahrwege 66 der zwei Fördereinheiten 20 im Wesentlichen parallel zueinander. Hierbei werden die Fördereinheiten 20 auf ihrem jeweiligen Fahrweg 66 über Referenzobjekte in der Umgebung geleitet, wobei beispielsweise Funk oder optische Mittel eingesetzt werden. Alternativ können auch entlang des Fahrwegs 66 mehrere anzufahrende GPS-Koordinaten vorgegeben werden.

Denkbar ist weiterhin, dass bereits zu diesem Zeitpunkt eine Zuweisung einer übergeordneten und einer untergeordnete Stellung erfolgen kann, so dass auch in einer Leerkonfiguration der Fördereinheiten 20 die erste Fördereinheit 20 mit der übergeordneten Stellung einem von der Zentralsteuerung vorgegebenen Fahrweg 66 folgt und die zweite Fördereinheit 20 mit der untergeordneten Stellung ihre Fahrparameter anpasst, um möglichst gemeinsam mit der ersten Fördereinheit 20 an dem Ladungsträger 12 anzukommen. Auf diese Weise fahren die zwei Fördereinheiten den Ladungsträger 12 gemeinsam an.

Die Bestimmung des Fahrwegs 66 der zweiten Fördereinheit kann derart erfolgen, dass die Fördereinheit 20 mit der übergeordneten Stellung ihre Position der Zentralsteuerung oder einer Steuereinrichtung in der Form einer On-Board-Steuerung 58 meldet und diese ihrerseits mit der zweiten Fördereinheit kommuniziert, um deren Fahrweg 66 festzulegen. Die obengenannte On-Board-Steuerung 58 kann entweder die der ersten oder die der zweiten Fördereinheit sein und die Berechnung des untergeordneten Fahrwegs 66 durchführen.

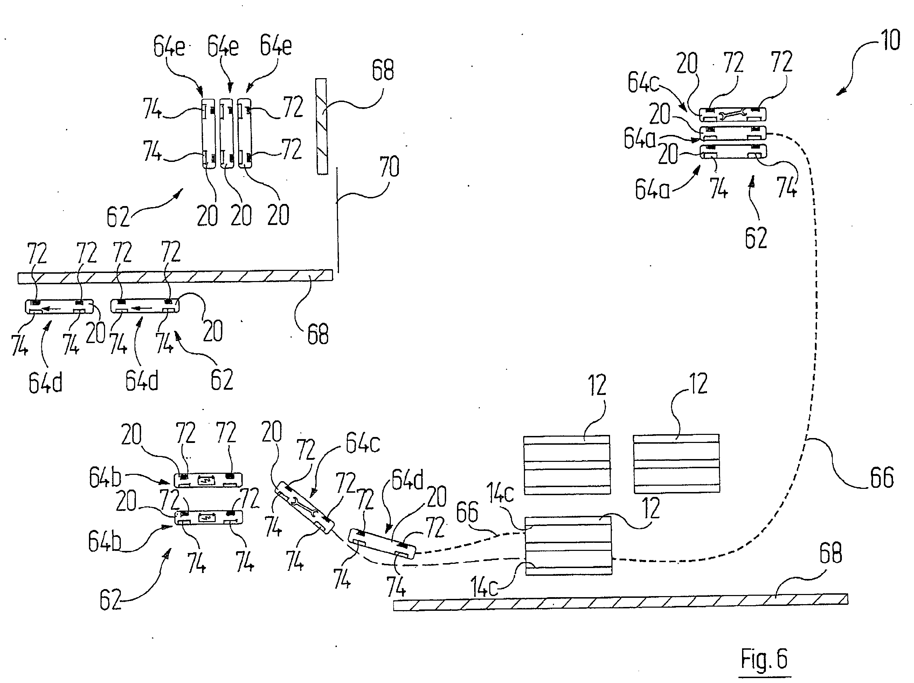

Die Figur 6 veranschaulicht den Fall, dass es während der Fahrt bei der in Fahrtrichtung gesehen rechts fahrenden Fördereinheit 20 zu einem Ausfall kommt, so dass ihr Zustand nun in den Wartungszustand 64c wechselt. Jetzt ermittelt die Zentralsteuerung die nächste Fördereinheit 20 in einem Frei-Zustand 64a und sendet an diese einen Transportauftrag. An dieser Stelle erfolgt eine erneute Paarbildung, diesmal mit der neu hinzukommenden Fördereinheit 20, die den noch nicht belegten lichten Durchgang 14c des Ladungsträgers 12 anfahren muss. Für den Fall, dass eine Zuweisung der untergeordneten und der übergeordneten Stellung bereits erfolgt ist, so tritt die neu hinzukommende Fördereinheit 20 in die Stellung der ausgefallenen Fördereinheit 20 ein.

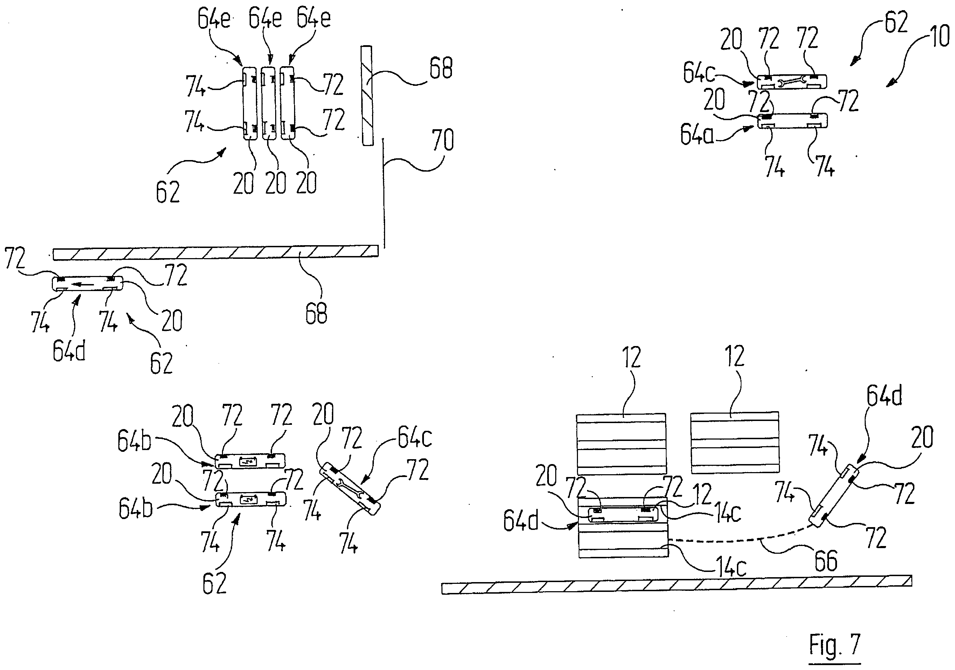

In der Figur 7 hat die erste Fördereinheit 20 bereits den Ladungsträger 12 unterfahren und ist mittig in dem entsprechenden lichten Durchgang 14c positioniert, wobei eine Fertigmeldung an die Zentralsteuerung erfolgt. Bei einer außermittigen Ausrichtung der Fördereinheit 20 entlang des lichten Durchgangs 14c ist ein Lenkwinkel-Offset erforderlich, um den Ladungsträger 12 präzise transportieren zu können. Die Ausrichtung jeder Fördereinheit 20 an dem Ladungsträger 12 erfolgt mit Hilfe von nicht eigens gezeigten Sensorikeinheiten, beispielsweise über Kamerasysteme oder Ultraschall, die in einem Frontalbereich beider Endbereiche 24a, 24b positioniert sind. Vorzugsweise werden die Fördereinheiten 20 unabhängig voneinander an dem jeweiligen lichten Durchgang 14c des zu transportierenden Ladungsträgers 12 ausgerichtet und bilden danach die Fördereinrichtung 18.

Um Sach- und Personenschaden zu vermeiden, umfasst jede Fördereinheit 20 nicht eigens gezeigte Sicherheitseinrichtungen, die beispielsweise an den Stirnseiten beider Endbereiche 24a, 24b angeordnet sind. Die Sicherheitseinrichtungen können Gegenstände oder Personen, die sich in dem Fahrweg 66 befinden, erfassen und dies der Zentralsteuerung mitteilen. Als Reaktion darauf nimmt die Zentralsteuerung eine Änderung der Fahrparameter vor, so dass die Fördereinheit 20 angehalten wird oder einen neuen Fahrweg zugewiesen bekommt.

Damit die Fördereinheit mit der untergeordneten Stellung eine Veränderung der relativen Lage der zwei Fördereinheiten 20 zueinander erfassen kann und ihre Fahrparameter dementsprechend anpassen kann, sind, wie in der Figur 6 gezeigt, entlang einer Längsseite der Fördereinheit 20 zwei Sensoren 72 vorgesehen. Dies kann die Systemverfügbarkeit erhöhen. Jeder Sensor 72 wertet einen Lichtstrahl aus, der von einer an der gegenüberfahrenden Fördereinheit 20 angeordneten Lichtquelle 74 generiert wird. Hierbei sind die Sensoren 72 beispielsweise als Kameras mit einer lichtempfindlichen Sensorfläche ausgeführt, die von der Lichtquelle 74 ausgeleuchtet wird. Aus der absoluten Lage der ausgeleuchteten Bereiche ermitteln die Sensoren 72 einen Versatz in Längsrichtung. Aus der geometrischen Größe der einzelnen ausgeleuchteten Bereiche sowie aus dem Unterschied der Größen zueinander wird ferner ein Winkelversatz und ein Abstand zwischen den zwei Fördereinheiten 20 erfasst. Als Lichtquellen 74 können beispielsweise LEDs vorgesehen sein.

Vorzugsweise ist jede Fördereinheit 20 sowohl mit den Sensoren 72 als auch mit den Lichtquellen 74 zur Lageerfassung ausgestattet, so dass alle Fördereinheiten 20 baugleich sind und jede Fördereinheit 20 sowohl in der untergeordneten als auch in der übergeordneten Stellung betrieben werden kann. Beim dargestellten Ausführungsbeispiel sind zwei Sensoren 72 und zwei Lichtquellen 74 entlang jeweils nur einer Längsseite jeder Fördereinheit 20 angebracht. Wenn eine Fördereinrichtung 18 gebildet wird, muss diese Anordnung berücksichtigt werden.

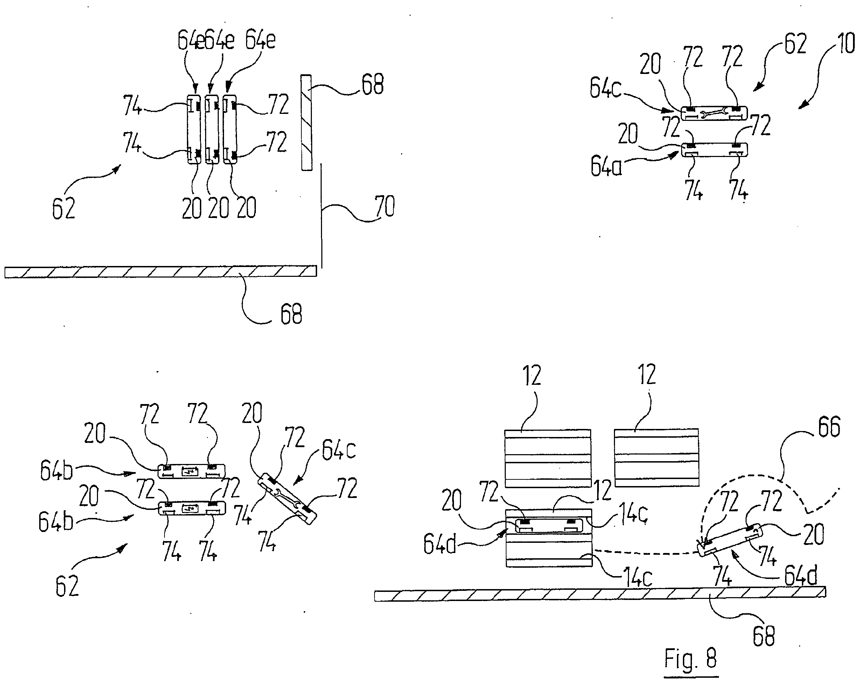

Damit die Fördereinheit mit der untergeordneten Stellung der Fördereinheit mit der übergeordneten Stellung folgen kann, müssen die Sensoren 72 der Fördereinheit mit der untergeordneten Stellung in Richtung der Fördereinheit mit der übergeordneten Stellung zeigen. Um diese Orientierung für die Fördereinheit 20, die neu hinzukommt, zu gewährleisten, ist unter Umständen eine Wendefahrt notwendig. Diese kann dadurch erfolgen, dass wie die Figur 8 veranschaulicht, eins der Rollenpaare 34 stehen bleibt und das andere Rollenpaar 34 in einer Kreisbahn um das erste Rollenpaar 34 herumfährt. Alternativ kann die Wendefahrt, wie bereits im Vorstehenden geschildert, über eine Kreisbahnfahrt erfolgen. Ist der Durchmesser der Kreisbahn genau gleich dem Abstand zwischen den Drehachsen 36 der Fördereinheit, so dreht die Fördereinheit 20 auf der Stelle. Da dabei alle vier Bodenrollen 26 der Fördereinheit koaxial zueinander sind, sind in diesem Fall zusätzliche nicht eigens gezeigte Elemente, wie beispielsweise Kugelrollen, zur Abstützung vorgesehen. Um ein Kippen der Fördereinheit zu verhindern, sind diese außerhalb der Ebene angeordnet, die die zwei Drehachsen 36 enthält.

Für den Fall, dass die Zuweisung der übergeordneten und untergeordneten Stellung noch nicht erfolgt ist, entscheidet die Zentralsteuerung darüber. Ein Kriterium kann dabei die kürzeste Zeit sein, die zur Bildung der Fördereinrichtung notwendig ist. Hierbei kann auch die zur Durchführung der Wendefahrt notwendige Zeit maßgeblich sein.

Um eine Orientierungsunabhängigkeit der Fördereinheiten zu erreichen, können sowohl zwei Sensoren 72 als auch zwei Lichtquellen 74 entlang jeder der Längsseiten der Fördereinheit 20 angeordnet sein, wobei sich ein Sensor 72 und eine Lichtquelle 74 stets gegenüberliegen. Somit ist gewährleistet, dass unabhängig von der Orientierung der zwei Fördereinheiten 20 eine der Fördereinheiten stets der anderen folgen kann.

Bei einem weiteren nicht eigens gezeigten Ausführungsbeispiel kann ein Sensor 72 jeweils zwei Lichtsignale von den zwei Lichtquellen 74 gleichzeitig auswerten, wobei die Lichtquellen 74 entsprechend nah beieinander angeordnet sind. Dadurch ist zur Lageerfassung jeweils nur ein Sensor 72 pro Seite notwendig, wodurch sich Herstellungskosten reduzieren lassen. Orientierungsunabhängigkeit ist bei derartigen Sensoren 72 dann gewährleistet, wenn entlang jeder Längsseite ein Sensor 72 und zwei Lichtquellen 74 angeordnet sind. Hierbei liegen sich ein Sensor 72 und zwei Lichtquellen 74 in einer gebildeten Fördereinrichtung 18 stets gegenüber.

In einem weiteren nicht eigens gezeigten Ausführungsbeispiel, sind eine Lichtquelle 74 und ein Sensor 72 zu einem Modul zusammengefasst. Dabei wird von der Lichtquelle 74 generiertes Licht an der gegenüberliegenden Fördereinheit reflektiert und von dem Sensor 74 erfasst, wobei mittels Triangulation die Lage der gegenüberliegenden Fördereinheit bestimmt werden kann. Zur Erfassung eines Winkelversatzes der Fördereinheiten zueinander werden pro Längsseite einer Fördereinheit zwei derartige Module eingesetzt, was zudem die Systemverfügbarkeit im Falle eines Ausfalls erhöht. Werden die Module beidseitig an den Fördereinheiten 20 angebracht, so lässt sich bei der Bildung einer Fördereinrichtung 18 Orientierungsunabhängigkeit der Fördereinheiten 20 erreichen.

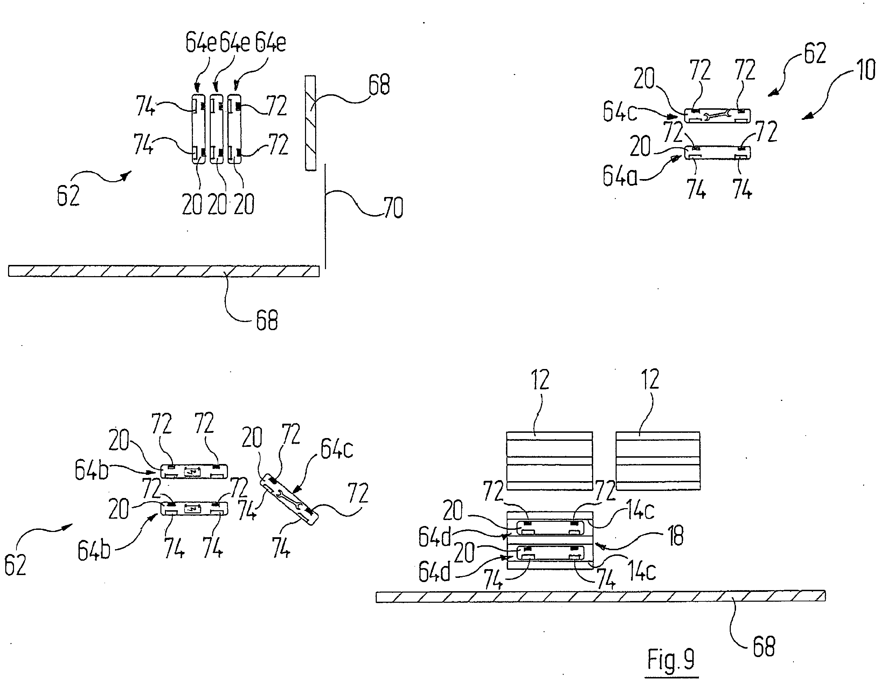

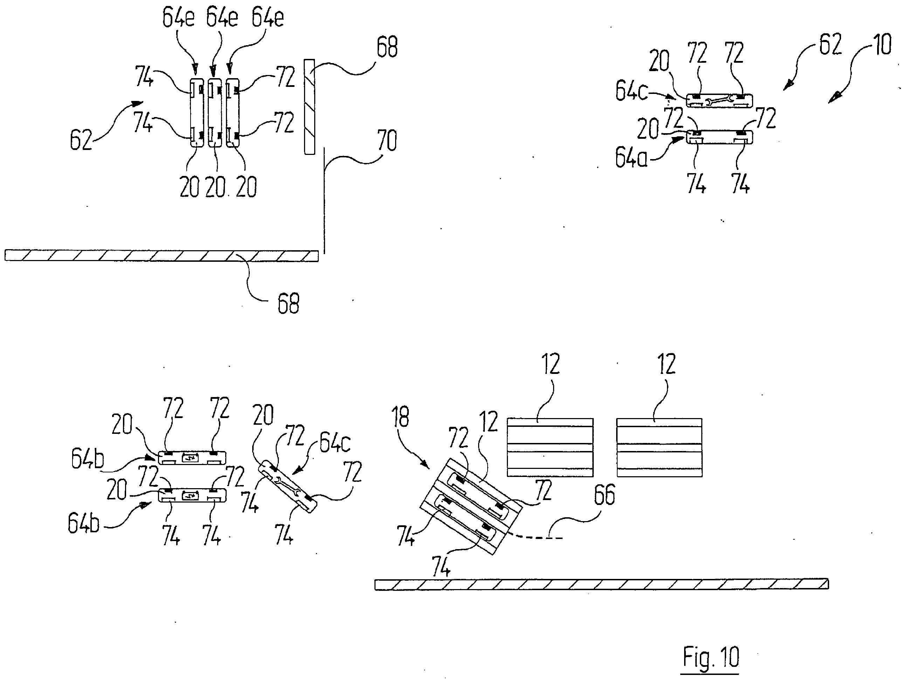

Falls die Zentralsteuerung, oder alternativ die On-Board-Steuerung 58 der Fördereinheit 20, die bereits den Ladungsträger 12 erreicht hat, keine Information über die genaue Lage des freien lichten Durchgangs 14c an die zweite Fördereinheit 20 sendet, kann es notwendig sein, dass die Fördereinheit 20 zunächst mittels einer nicht eigens gezeigten Freiraumerkennungseinrichtung ermittelt, wo sich ein lichter Durchgang 14c befindet und ob dieser belegt ist oder nicht. Falls dieser belegt ist, so steuert die Fördereinheit 20 den benachbarten lichten Durchgang 14c an. Nachdem die zweite Fördereinheit 20 an dem Ladungsträger 12, wie in der Figur 9 gezeigt, ausgerichtet worden ist, erfolgt eine Fertigmeldung an die Zentralsteuerung. Dann werden die Tragelemente 28 der beiden Fördereinheiten 20 synchronisiert angehoben, so dass der Ladungsträger 12 als Ganzes und gegebenenfalls mit dem darauf platzierten Fördergut angehoben wird. Dann kann der Ladungsträger 12 mit Hilfe der Fördereinrichtung 18 an einen anderen Ort gefördert werden. Damit ist die in der Figur 10 veranschaulichte gemeinsame Fahrt der Fördereinheiten 20 in einer Fördereinrichtung 18 möglich.

Bei einer Geradeaus-Fahrt der Fördereinrichtung 18 sind die Bodenrollen 26 in jedem Fahrwerkendbereich 24a, 24b der ersten Fördereinheit 20 der Fördereinrichtung 18 koaxial zu den Bodenrollen 26 in dem entsprechenden Fahrwerkendbereich 24a, 24b der zweiten Fördereinheit 20 der Fördereinrichtung 18. Alternativ kann auch ein geringfügiger Versatz der Achsen der Rollenpaare 34 toleriert werden, wenn dieser mittels dem bereits genannten Lenkwinkel-Offset rechnerisch bei der Fahrwegberechnung kompensiert wird.

Eine Art Parallelverschiebung eines Ladungsträgers 12 kann erfolgen, wenn die Rollenpaare 34 von beiden Fördereinheiten 20 einer Fördereinrichtung 18 nach einer Geradeaus-Fahrt zunächst um den gleichen Winkelbetrag in die gleiche Drehrichtung um die Drehachse 36 verdreht werden, so dass die Achsen aller Bodenrollen 26 parallel zueinander sind. Werden dann die Bodenrollen 26 alle synchron und gleich angetrieben, so nimmt die Fördereinrichtung eine Linearfahrt-Konfiguration für eine Diagonal-Fahrt ein.

Bei einer Fahrt in Richtung quer zu der Längsachse der Fördereinrichtung 18 sind die Rollenpaare 34 von beiden Fördereinheiten 20 der Fördereinrichtung 18 um jeweils 90° um die Drehachse 36 verdreht, so dass die Bodenrollen 26 jeweils koaxial zueinander sind. Hierbei werden alle Rollenpaare 34 synchron und gleich angetrieben.

Wird nur eine leere Fördereinheit 20 quer verfahren, sind analog zu der bereits beschriebenen Drehung der Fördereinheit 20 auf der Stelle, zusätzliche Elemente, wie beispielsweise Kugelrollen, zur Abstützung vorgesehen. Dabei sind diese außerhalb der Ebene angeordnet, die die zwei Drehachsen 36 enthält.

Besonders vorteilhaft ist es, wenn ein Wechsel der untergeordneten und der übergeordneten Stellung der Fördereinheiten 20 jederzeit möglich ist. Hierbei werden die Fördereinheiten 20 umorientiert, so dass die Sensoren 72 der Fördereinheit 20 in der untergeordneten Stellung zu der Fördereinheit 20 in der übergeordneten Stellung gerichtet sind. Alternativ können die bereits beschriebenen Fördereinheiten 20 mit beidseitiger Anordnung von Sensoren 72 und Lichtquellen 74 eingesetzt werden, die in einer Fördereinrichtung 18 keine Orientierungsabhängigkeit aufweisen. Dadurch wird die Flexibilität des Fördersystems 10 deutlich erhöht. Zudem ist es günstig, wenn bei Ausfall einer Fördereinheit 20 die Fördereinrichtung 18 aufgelöst wird und mit einer neu hinzugekommenen Fördereinheit 20 neu gebildet wird.

## Patentansprüche

1. Steuerungsverfahren für ein Fördersystem (10) zum Fördern von beladenen oder unbeladenen Ladungsträgern (12), bei dem ein Fördersystem mit mindestens zwei voneinander getrennte freifahrende Fördereinheiten (20) bereitgestellt wird, die jeweils aufweisen:
a) ein Fahrwerk (24), welches auf Bodenrollen (26) verfahrbar ist;
b) ein von dem Fahrwerk (24) mitgeführtes Tragelement (28), welches bezogen auf das Fahrwerk (24) anhebbar oder absenkbar ist, derart, dass die Fördereinheit (20) in einer Leerkonfiguration einen Ladungsträger (12) unterfahren und in einer Förderkonfiguration einen Ladungsträger(12) mit dem Tragelement (28) aufnehmen kann;
c) ein Antriebssystem (30), mittels welchem wenigstens eine der Bodenrollen (26) und das Tragelement (28) antreibbar sind, und
d) eine Steuereinrichtung, der eine Zentralsteueung einen Fahrweg (66) zuweist und daraus die Fahrparameter bestimmt, die zur Steuerung des Antriebssystems (30) verwendet werden,
**dadurch gekennzeichnet, dass**
dass die erste Fördereinheit und die zweite Fördereinheit dann, wenn sie sich in ihrer Förderkonfiguration befinden und gemeinsam einen Ladungsträger aufgenommen haben, eine Fördereinrichtung bilden, die dazu eingerichtet ist, den Ladungsträger zu fördern, und dass
zumindest dann, wenn der Ladungsträger unbeladen ist, von den mindestens zwei Fördereinheiten einer ersten Fördereinheit (20) eine übergeordnete Stellung und einer zweiten Fördereinheit (20) eine untergeordnete Stellung zugewiesen wird, derart, dass die zweite Fördereinheit (20) der ersten Fördereinheit (20) folgt, indem die zweite Fördereinheit (20) mit Hilfe eines Sensors eine Veränderung der relativen Lage der ersten und der zweiten Fördereinheit (20) zueinander erfasst und Fahrparameter, die zu ihrer Steuerung verwendet werden, in Abhängigkeit von der vom Sensor (72) erfassten Veränderung der relativen Lage modifiziert.

2. Steuerungsverfahren nach Anspruch 1, **dadurch gekennzeichnet, dass** die Fördereinheiten (20) einzeln und unabhängig voneinander einen zu transportierenden Ladungsträger (12) anfahren, solange sie keine Fördereinrichtung (18) gebildet haben.

3. Steuerungsverfahren nach einem der vorhergehenden Ansprüche, **dadurch gekennzeichnet, dass** die zweite Fördereinheit (20) mittels eines entlang einer Längsseite angeordneten Sensors (72) die Veränderung der relativen Lage der ersten und der zweiten Fördereinheit zueinander erfasst, und dass die zweite Fördereinheit derart ausgerichtet wird, dass der Sensor (72) der zweiten Fördereinheit in Richtung der ersten Fördereinheit zeigt.

4. Steuerungsverfahren nach einem der vorhergehenden Ansprüche, **dadurch gekennzeichnet, dass** bei einer Fahrt in Richtung diagonal zu der Längsachse der Fördereinrichtung (18) die Bodenrollen (26) jeder Fördereinheit (20) der Fördereinrichtung (18) jeweils parallel zueinander sind.

5. Steuerungsverfahren nach Anspruch 4, **dadurch gekennzeichnet, dass** bei einer Fahrt in Richtung senkrecht zu der Längsachse der Fördereinrichtung (18) die Bodenrollen (26) jeder Fördereinheit (20) der Fördereinrichtung (18) jeweils koaxial zueinander sind.

6. Steuerungsverfahren nach einem der vorhergehenden Ansprüche, **dadurch gekennzeichnet, dass** bei Ausfall einer Fördereinheit (20) die Fördereinrichtung (18) aufgelöst wird und mit einer neu hinzugekommenen Fördereinheit (20) neu gebildet wird.

## Claims

1. Control method for a conveying system (10) for conveying laden or unladen load carriers (12), in the case of which the conveying system provided is one which has at least two separate, free-moving conveying units (20), each having:
a) a chassis (24), which can be displaced on floor rollers (26);
b) a carrying element (28), which is carried along by the chassis (24) and can be raised or lowered in relation to the chassis (24) such that the conveying unit (20), in an empty configuration, can move beneath a load carrier (12) and, in a conveying configuration, can accommodate a load carrier (12) by means of the carrying element (28) ;
c) a drive system (30), by means of which at least one of the floor rollers (26) and the carrying element (28) can be driven, and
d) a control device, to which a central control means assigns a travel path (66) and which uses this to determine travel parameters which are used for controlling the drive system (30), **characterized in that**
**in that**, when they are located in their conveying configuration and together have accommodated a load carrier, the first conveying unit and the second conveying unit form a conveying apparatus, which is intended to convey the load carrier, and **in that**,
at least when the load carrier is unladen, of the at least two conveying units a first conveying unit (20) is assigned a superordinate position and a second conveying unit (20) is assigned a subordinate position such that the second conveying unit (20) follows the first conveying unit (20), the second conveying unit (20), with the aid of a sensor, sensing a change in the position of the first and of the second conveying units (20) relative to one another and, in dependence on the change in the relative position sensed by the sensor (72), modifying travel parameters which are used for controlling the second conveying unit.

2. Control method according to Claim 1, **characterized in that**, as long as they have not formed a conveying apparatus (18), the conveying units (20) advance individually, and independently of one another, up to a load carrier (12) which is to be transported.

3. Control method according to either of the preceding claims, **characterized in that** the second conveying unit (20) senses the change in the position of the first and of the second conveying units in relation to one another by means of a sensor (72) arranged along a longitudinal side, and **in that** the second conveying unit is oriented such that the sensor (72) of the second conveying unit faces in the direction of the first conveying unit.

4. Control method according to one of the preceding claims, **characterized in that**, in the event of travel in a direction diagonal to the longitudinal axis of the conveying apparatus (18), the floor rollers (26) of each conveying unit (20) of the conveying apparatus (18) are parallel to one another in each case.

5. Control method according to Claim 4, **characterized in that**, in the event of travel in a direction perpendicular to the longitudinal axis of the conveying apparatus (18), the floor rollers (26) of each conveying unit (20) of the conveying apparatus (18) are coaxial in relation to one another in each case.

6. Control method according to one of the preceding claims, **characterized in that**, in the event of failure of a conveying unit (20), the conveying apparatus (18) is dismantled and formed anew with a newly added conveying unit (20).

## Revendications

1. Procédé de commande destiné à un système de convoyage (10) réalisé pour convoyer des porte-charges (12) garnis ou non garnis, dans lequel on fournit un système de convoyage muni d'au moins deux unités de convoyage (20) à déplacement libre, séparées l'une de l'autre et comprenant, respectivement :
a) un châssis de roulement (24) pouvant être déplacé sur des roulettes inférieures (26) ;
b) un élément de support (28) entraîné par le châssis de roulement (24) et pouvant être relevé ou abaissé, par rapport audit châssis de roulement (24), de façon telle que l'unité de convoyage (20) puisse passer au-dessous d'un porte-charges (12) dans une configuration à vide et puisse, dans une configuration de convoyage, recevoir un porte-charges (12) associé audit élément de support (28) ;
c) un système d'entraînement (30), au moyen duquel au moins l'une des roulettes inférieures (26) et l'élément de support (28) peuvent être entraînés, et
d) un dispositif de commande auquel une commande centralisée assigne un trajet de déplacement (66) et détermine, sur cette base, les paramètres de déplacement utilisés pour la commande dudit système d'entraînement (30),
**caractérisé par le fait**
**que**, lorsqu'elles se trouvent dans leur configuration de convoyage et ont reçu conjointement un porte-charges, la première unité de convoyage et la seconde unité de convoyage forment un dispositif convoyeur agencé en vue de convoyer ledit porte-charges ; et
**qu'**au moins lorsque ledit porte-charges est non garni, une position dominante et une position subordonnée sont respectivement assignées à une première unité de convoyage (20) et à une seconde unité de convoyage (20), au sein des deux unités de convoyage à présence minimale, de telle sorte que la seconde unité de convoyage (20) suive la première unité de convoyage (20) du fait que ladite seconde unité de convoyage (20) détecte, à l'aide d'un capteur, une variation de la position relative desdites première et seconde unités de convoyage (20) et modifie des paramètres de déplacement, utilisés pour leur commande, en fonction de ladite variation de la position relative détectée par ledit capteur (72).

2. Procédé de commande selon la revendication 1, **caractérisé par le fait que** les unités de convoyage (20) déservent un porte-charges (12) à transporter, individuellement et indépendamment l'une de l'autre, tant qu'elles n'ont pas formé un dispositif convoyeur (18).

3. Procédé de commande selon l'une des revendications précédentes, **caractérisé par le fait que** la seconde unité de convoyage (20) détecte la variation de la position relative des première et seconde unités de convoyage au moyen d'un capteur (72) implanté le long d'un côté longitudinal ; et **par le fait que** la seconde unité de convoyage est orientée de telle manière que ledit capteur (72) de ladite seconde unité de convoyage pointe en direction de la première unité de convoyage.

4. Procédé de commande selon l'une des revendications précédentes, **caractérisé par le fait que**, lors d'un déplacement dans une direction diagonale par rapport à l'axe longitudinal du dispositif convoyeur (18), les roulettes inférieures (26) de chaque unité de convoyage (20) dudit dispositif convoyeur (18) occupent, à chaque fois, des positions mutuellement parallèles.

5. Procédé de commande selon la revendication 4, **caractérisé par le fait que**, lors d'un déplacement dans une direction perpendiculaire à l'axe longitudinal du dispositif convoyeur (18), les roulettes inférieures (26) de chaque unité de convoyage (20) dudit dispositif convoyeur (18) occupent, à chaque fois, des positions mutuellement coaxiales.

6. Procédé de commande selon l'une des revendications précédentes, **caractérisé par le fait qu'**en cas de défaillance d'une unité de convoyage (20), le dispositif convoyeur (18) est dissocié, puis est de nouveau formé avec une unité de convoyage (20) nouvellement ajoutée.
